# EUROPEAN PATENT APPLICATION

(11) **EP 4 332 129 A1**
(43) Date of publication of application: **06.03.2024**
(21) Application number: 22794401.4
(22) Date of filing: 18.03.2022
(51) Int. Cl.: C08F 110/08, C08F 110/14

(54) **BRANCHED OLEFIN POLYMER, PREPARATION METHOD THEREFOR AND USE THEREOF**

(30) Priority: 29.04.2021 CN 202110478113
(71) Applicant: CHINA PETROLEUM & CHEMICAL CORPORATION, Chaoyang District Beijing 100728 (CN); BEIJING RESEARCH INSTITUTE OF CHEMICAL INDUSTRY, CHINA PETROLEUM & CHEMICAL CORPORATION, Chaoyang District Beijing 100013 (CN)
(72) Inventor: GAO, Rong, Beijing 100013 (CN); GOU, Qingqiang, Beijing 100013 (CN); ZHANG, Xiaofan, Beijing 100013 (CN); LAI, Jingjing, Beijing 100013 (CN); ZHOU, Junling, Beijing 100013 (CN); LIN, Jie, Beijing 100013 (CN); LI, Xinyang, Beijing 100013 (CN); AN, Jingyan, Beijing 100013 (CN)
(74) Representative: Hoffmann Eitle
(86) International application number: PCT/CN2022/081654
(87) International publication number: WO 2022/227924

(57) **Abstract**

The present invention belongs to the technical field of branched polyolefin materials, and discloses a branched olefin polymer, a preparation method therefor and the use thereof. The branched olefin polymer is obtained by polymerizing at least one C4-C20 nonterminal olefin monomer with optional ethylene, propylene, and C4-C20 terminal olefin monomers; and the branched olefin polymer has the following characteristics: (a) a molecular weight of 20000 to 500000 g/mol; (b) a molecular weight distribution of 3.5 to 6.0, and a bimodal structure characterized by GPC; (c) a melting point of 0°C to 110°C and a glass-transition temperature of -80°C to -50°C; and (d) having 20 to 200 methyl groups per 1000 methylene groups.

## Description

### Technical Field

The invention belongs to the technical field of polyolefin materials, and more particularly, relates to a branched olefin polymer, a preparation method therefor and use thereof.

### Background Art

Compared with other resin materials, olefin resins have excellent environmental coordination, and are used as a mainly promotional material in the automobile industry in developed countries. Commercialized polyethylene catalysts include Ziegler-Natta type catalysts (DE Patent 889229 (1953); IT Patent 545332 (1956); IT Patent 536899 (1955); Chem. Rev., 2000, 100, 1169 and related references therein), Phillips-type catalysts (Belg. Pat. 530617 (1955); Chem. Rev. 1996, 96, 3327), metallocene-type catalysts (W. Kaminsky, Metalorganic Catalysts for Synthesis and Polymerization, Berlin: Springer, 1999), and late transition metal complex-type efficient catalysts for ethylene oligomerization and polymerization rapidly developed in recent years. For example, in 1995, Brookhart et al. reported a class of α-diimine Ni(II) complexes, which can catalyze ethylene polymerization with high activity.

CN11148641 discloses a polyolefin elastomer having excellent properties, which polyolefin elastomer is prepared by catalyzing, by using a single-active-site catalyst, the copolymerization of ethylene and a long-chain α-olefin monomer, which is mainly α-hexene, α-octene or the like. However, the selective production of long-chain α-olefins is technically difficult, and the process for separating α-olefins from internal olefins is relatively long. The emergence of each new generation of catalysts has brought tremendous development to the olefin polymerization field, but the kinds of olefins that can be polymerized efficiently may be limited. All olefins whose double bond is not at the ends of the carbon chain are called internal olefins. Due to the large steric hindrance of internal olefins, it is not easy for cationic metal centers with bulky ligands to insert into the double bond of the internal olefins. Therefore, almost all internal olefins and derivatives thereof are non-active or very lowly active to homogeneous polymerization so that many internal olefins have not been used as polymerization monomers yet. Only a few literatures have hitherto reported the polymerization performance of internal olefins (Polymer 2017, 127, 88; Organometallics 2018, 37, 1358-1367), and the polymerization performance of an internal olefin together with a terminal olefin as polymerization monomers has rarely been reported. Furthermore, the internal olefins have generally low copolymerization activities. If the copolymerization of these internal olefins and terminal olefins can be catalyzed to obtain polymers, not only the process of separating internal olefins from terminal olefins can be omitted, but also the new polymer materials obtained may exhibit special properties different from those of the currently used polyolefin materials.

Bimodal polyethylene resins can be prepared through different methods. Bimodal polyethylene products can be produced by physically blending different unimodal polyolefin products produced separately. However, the product homogeneity of the bimodal product prepared by physical blending and the inclusion of a high content of gel after mixing are issues difficult to solve. In a method of preparing bimodal polyethylene by sequential polymerization in multiple separate reactors in series, if the molecular weights as well as densities of individual polyethylene components are too significantly different from each other, then desired uniform mixing cannot be achieved, and the performance advantages of bimodal polyethylene products cannot fully exhibit. The preparation of bimodal polyethylene resin in a single reactor by a double-site metal catalyst has successful industrial practice, but in such a process, the screening and preparation of catalysts are technically difficult.

Hence, there is still an unmet need in the art to branched olefin polymers and methods for the preparation of the same.

### Summary of the Invention

In view of the above, the inventors have prepared a branched bimodal olefin polymer by a specific method after extensive and in-depth researches. It has now been found that catalyst systems comprising specific complexes can catalyze the copolymerization of at least one internal olefin and optionally ethylene, propylene and/or higher terminal olefins at high activity to produce branched bimodal olefin polymers. Compared to the commercial bimodal polyethylene resin preparation method, the method of the present invention does not need to separate internal olefins from mixed olefins, does not need to use multi-tank series operation, and does not need to use multi-site catalyst in the preparation so that it can greatly simplify the process and reduce production costs, and product performance is better.

In a first aspect, the present invention provides a branched olefin polymer obtained by polymerizing at least one C4-C20 internal olefin monomer and optionally at least one C2-C20 terminal olefin monomer, the branched olefin polymer having the following characteristics:
(a) a molecular weight of from 10,000 to 500,000 g/mol, and preferably from 20,000 to 500,000 g/mol;
(b) a molecular weight distribution of from 3.5 to 6.0, with the GPC characterization showing a bimodal profile;
(c) a melting point of from 0 °C to 110 °C, and a glass transition temperature of from -80 °C to -50 °C;
(d) a number of methyl groups per 1000 methylene groups of from 20 to 200; and
   the branched olefin polymer including a structure of R¹R²CH(CH₂)ₙCHR³R⁴ or R¹R²R³C(CH₂)ₙCR⁴R⁵R⁶, wherein at least one of R¹ to R⁶ contains a segment structure of R⁷R⁸C(CH₂)ₘCR⁹R¹⁰, wherein at least one of R⁷ to R¹⁰ contains a segment structure of R¹¹CH(CH₂)ₚCHR¹² or R¹¹CH(CH₂)ₚCR¹²R¹³, wherein R¹¹ to R¹³ are each independently hydrogen, a linear or branched hydrocarbyl, preferably a hydrocarbyl with 4 to 10,000 carbon atoms, and n, m, p are respectively an integer from 1 to 500.

In a second aspect, the present invention provides a method for preparing the above-described branched olefin polymer, in which the branched olefin polymer is obtained by catalytic polymerization using a catalyst system comprising a metal complex having a structure represented by formula I: 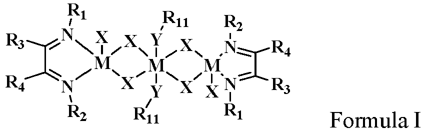 wherein, R₁ and R₂ are each independently a C1-C30 hydrocarbyl with or without a substituent; R₃ and R₄ are each independently selected from the group consisting of hydrogen, halogen, hydroxy, and C1-C20 hydrocarbyl with or without a substituent, and adjacent R₃ and R₄ groups are optionally joined to form a ring or ring system; each R₁₁ is independently a C1-C20 hydrocarbyl with or without a substituent; each Y is independently a Group VIA non-metal atom; each M is independently a Group VIII metal; and each X is independently selected from the group consisting of halogen, C1-C10 hydrocarbyl with or without a substituent and C1-C10 hydrocarbyloxy with or without a substituent.

In a third aspect, the present invention provides use of the above-described branched olefin polymer or the branched olefin polymer obtained by the above-described preparation method, including use:
(1) as a processing aid for resins;
(2) as a plasticizer; and
(3) in a hot-melt adhesive.

In a further aspect, the present invention provides a branched olefin polymer having units derived from at least one C4-C20 internal olefin monomer and optionally units derived from at least one C2-C20 terminal olefin monomer, the branched olefin polymer having the following characteristics:
(a) a molecular weight of from 10,000 to 500,000 g/mol;
(b) a molecular weight distribution of from 3.5 to 6.0, with the GPC characterization showing a bimodal profile;
(c) a melting point of from 0 °C to 110 °C, and a glass transition temperature of from -80 °C to -50 °C;
(d) a number of methyl groups per 1000 methylene groups of from 20 to 200.

In a still further aspect, the present invention provides a polymer composition comprising the branched olefin polymer of the present disclosure, wherein the branched olefin polymer is used as a processing aid or plasticizer for resins, and/or the polymer composition can be used as a hot-melt adhesive.

Compared to the prior art, the main advantages of the present invention include: in the present invention, narrow-distribution, bimodal polyolefin is directly prepared in a single reactor at high activity by a single catalyst so that the polymerization process can be greatly simplified, and the resultant branched olefin polymer has a certain degree of branching and a bimodal molecular weight distribution, can be used as a processing aid or plasticizer, and can also be used directly as a plastomer material.

Other features and advantages of the present invention will be described in detail in the following detailed description.

### Description of the Drawings

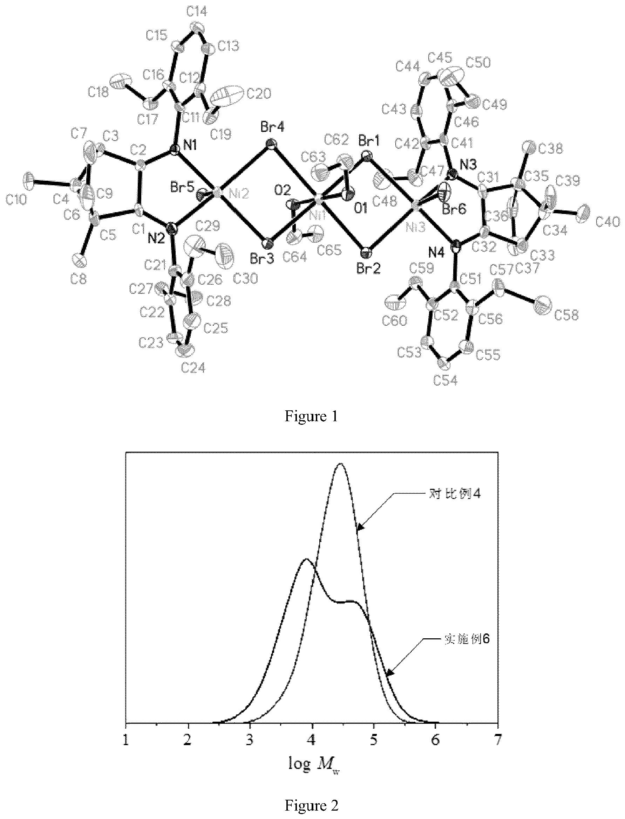

Figure 1 is a structural unit diagram of the complex Ni₁ in the inventive examples (for the sake of clarity, hydrogen atoms, dichloromethane solvent molecules and symmetrical atoms are not marked).
Figure 2 shows the GPC traces of the polymers of the inventive Example 6 and Comparative Example 4.

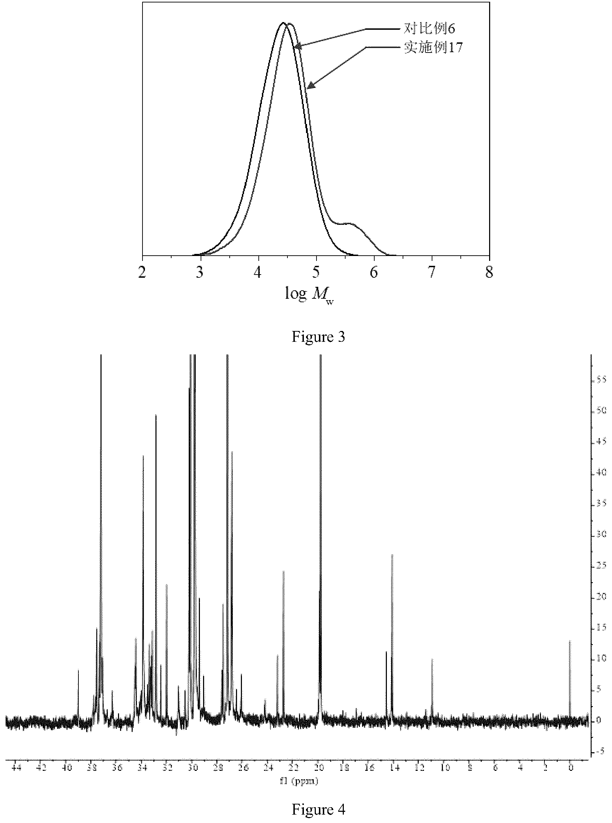

Figure 3 shows the GPC traces of the polymers of the inventive Example 17 and Comparative Example 6.
Figure 4 shows the nuclear magnetic spectrum of the polymer obtained in the inventive Example 6.

### Detailed Description

Specific embodiments of the present invention will be described in detail below. It should be understood that the specific embodiments described herein are only used to illustrate and explain the present invention, but not to limit the present invention.

According to the first aspect, the present invention provides a branched olefin polymer obtained by polymerizing at least one C4-C20 internal olefin monomer and optionally at least one C2-C20 terminal olefin monomer, the branched olefin polymer having the following characteristics:
(a) a molecular weight of from 10,000 to 500,000 g/mol, and preferably from 20,000 to 500,000 g/mol;
(b) a molecular weight distribution of from 3.5 to 6.0, with the GPC characterization showing a bimodal profile;
(c) a melting point of from 0 °C to 110 °C, and a glass transition temperature of from -80 °C to -50 °C;
(d) a number of methyl groups per 1000 methylene groups of from 20 to 200; and

the branched olefin polymer including a structure of R¹R²CH(CH₂)ₙCHR³R⁴ or R¹R²R³C(CH₂)ₙCR⁴R⁵R⁶, wherein R¹ to R⁶ contain a segment structure of R⁷R⁸C(CH₂)ₘCR⁹R¹⁰, wherein R⁷ to R¹⁰ contain a segment structure of R¹¹CH(CH₂)ₚCHR¹² or R¹¹CH(CH₂)ₚCR¹²R¹³, wherein R¹¹ to R¹³ are hydrogen or a linear or branched hydrocarbyl, and n, m, p are respectively an integer from 1 to 500.

Preferably, the branched olefin polymer has the following characteristics: a number of methyl groups per 1000 methylene groups of from 20 to 100, and a molecular weight of from 20,000 to 300,000 g/mol.

Preferably, the branched olefin polymer contains 20 to 100 alkyl branches per 1000 methylene groups, and the branched olefin polymer contains 2 to 10 ethyl branches, 1 to 10 propyl branches, 1 to 10 butyl branches, 1 to 10 pentyl branches, and 1 to 20 hexyl or longer branches, relative to 50 methyl branches.

According to the second aspect, the present invention provides a method for preparing the above-described branched olefin polymer, in which the branched olefin polymer is obtained by catalytic polymerization using a catalyst system comprising a metal complex having a structure represented by Formula I: 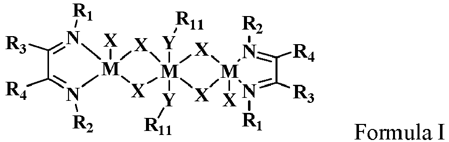 wherein, R₁ and R₂ are each independently a C1-C30 hydrocarbyl with or without a substituent; R₃ and R₄ are each independently selected from the group consisting of hydrogen, halogen, hydroxy, and C1-C20 hydrocarbyl with or without a substituent, and adjacent R₃ and R₄ groups are optionally joined to form a ring or ring system; each R₁₁ is independently a C1-C20 hydrocarbyl with or without a substituent; each Y is independently a Group VIA non-metal atom; each M is independently a Group VIII metal; and each X is independently selected from the group consisting of halogen, C1-C10 hydrocarbyl with or without a substituent and C1-C10 hydrocarbyloxy with or without a substituent.

Preferably, in Formula I, R₁ and R₂ are independently selected from the group consisting of C1-C20 alkyl with or without a substituent and C6-C20 aryl with or without a substituent.

Further preferably, in Formula I, R₁ and/or R₂ are/is a group represented by formula P: 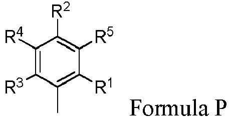 wherein, R¹-R⁵ are the same or different, and are each independently selected from the group consisting of hydrogen, halogen, hydroxy, C1-C20 linear alkyl with or without a substituent, C3-C20 branched alkyl with or without a substituent, C2-C20 alkenyl with or without a substituent, C2-C20 alkynyl with or without a substituent, C3-C20 cycloalkyl with or without a substituent, C1-C20 linear alkoxy with or without a substituent, C3-C20 branched alkoxy with or without a substituent, C2-C20 alkenoxy with or without a substituent, C2-C20 alkynoxy with or without a substituent, C3-C20 cyclic alkoxy with or without a substituent, C6-C20 aryl with or without a substituent, C7-C20 aralkyl with or without a substituent, and C7-C20 alkaryl with or without a substituent, and R¹-R⁵ are optionally joined to form a ring.

Preferably, in Formula P, R¹ to R⁵ are the same or different, and are each independently selected from the group consisting of hydrogen, halogen, hydroxy, C1-C10 linear alkyl with or without a substituent, C3-C10 branched alkyl with or without a substituent, C2-C10 alkenyl with or without a substituent, C2-C10 alkynyl with or without a substituent, C3-C10 cycloalkyl with or without a substituent, C1-C10 linear alkoxy with or without a substituent, C3-C10 branched alkoxy with or without a substituent, C2-C10 alkenoxy with or without a substituent, C2-C10 alkynoxy with or without a substituent, C3-C10 cyclic alkoxy with or without a substituent, C6-C15 aryl with or without a substituent, C7-C15 aralkyl with or without a substituent, and C7-C15 alkaryl with or without a substituent.

Preferably, in Formula I, each M is selected from nickel and palladium.

Preferably, in Formula I, each Y is selected from O and S.

Preferably, in Formula I, each X is selected from the group consisting of halogen, C1-C10 alkyl with or without a substituent and C1-C10 alkoxy with or without a substituent, preferably from the group consisting of halogen, C1-C6 alkyl with or without a substituent and C1-C6 alkoxy with or without a substituent.

Preferably, in Formula I, each R₁₁ is a C1-C20 alkyl with or without a substituent, preferably a C1-C10 alkyl with or without a substituent, and more preferably a C1-C6 alkyl with or without a substituent.

Preferably, in Formula I, R₃ and R₄ are each independently selected from the group consisting of hydrogen, halogen, hydroxy, C1-C20 alkyl with or without a substituent, C2-C20 alkenyl with or without a substituent, C2-C20 alkynyl with or without a substituent, C1-C20 alkoxy with or without a substituent, C2-C20 alkenoxy with or without a substituent, C2-C20 alkynoxy with or without a substituent, C6-C20 aryl with or without a substituent, C6-C20 aryloxy with or without a substituent, C7-C20 aralkyl with or without a substituent, C7-C20 aralkoxy with or without a substituent, C7-C20 alkaryl with or without a substituent and C7-C20 alkaryloxy with or without a substituent. More preferably, R₃ and R₄ are each independently selected from the group consisting of hydrogen, halogen, hydroxy, C1-C10 linear alkyl with or without a substituent, C1-C10 branched alkyl with or without a substituent, C2-C10 alkenyl with or without a substituent, C2-C10 alkynyl with or without a substituent, C3-C10 cycloalkyl with or without a substituent, C1-C10 linear alkoxy with or without a substituent, C1-C10 branched alkoxy with or without a substituent, C2-C10 alkenoxy with or without a substituent, C2-C10 alkynoxy with or without a substituent, C3-C10 cycloalkoxy with or without a substituent, C6-C15 aryl with or without a substituent, C6-C15 aryloxy with or without a substituent, C7-C15 aralkyl with or without a substituent, C7-C15 aralkoxy with or without a substituent, C7-C15 alkaryl with or without a substituent and C7-C15 alkaryloxy with or without a substituent. More preferably, R₃ and R₄ are each independently selected from the group consisting of hydrogen, C1-C10 alkyl, halogenated C1-C10 alkyl, C1-C10 alkoxy, halogenated C1-C10 alkoxy and halogen, and more preferably from the group consisting of hydrogen, C1-C6 alkyl, halogenated C1-C6 alkyl, C1-C6 alkoxy, halogenated C1-C6 alkoxy and halogen.

Preferably, for the formula I, said substituent is selected from the group consisting of halogen, hydroxy, C1-C10 alkyl, halogenated C1-C10 alkyl, C1-C10 alkoxy and halogenated C1-C10 alkoxy, preferably from the group consisting of halogen, hydroxy, C1-C6 alkyl, halogenated C1-C6 alkyl, C1-C6 alkoxy and halogenated C1-C6 alkoxy. Preferably, the C1-C6 alkyl is selected from the group consisting of methyl, ethyl, n-propyl, isopropyl, n-butyl, isobutyl, n-pentyl, isopentyl, n-hexyl, isohexyl and 3,3-dimethylbutyl. Preferably, the C1-C6 alkoxy is selected from the group consisting of methoxy, ethoxy, n-propoxy, iso-propoxy, n-butoxy, iso-butoxy, n-pentoxy, iso-pentoxy, n-hexoxy, iso-hexoxy and 3,3-dimethylbutoxy. Preferably, the halogen is selected from the group consisting of fluorine, chlorine, bromine and iodine.

According to an embodiment of the invention, the metal complex has a structure represented by formula II: 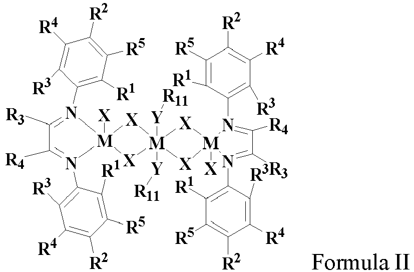 wherein, R¹-R⁵ are each independently selected from the group consisting of hydrogen, halogen, hydroxy, C1-C10 linear alkyl with or without a substituent, C3-C10 branched alkyl with or without a substituent, C3-C10 cycloalkyl with or without a substituent, C1-C10 linear alkoxy with or without a substituent, C3-C10 branched alkoxy with or without a substituent, C3-C10 cycloalkoxy with or without a substituent, C6-C15 aryl with or without a substituent, C7-C15 aralkyl with or without a substituent and C7-C15 alkaryl with or without a substituent;
R₃ and R₄ are each independently selected from the group consisting of hydrogen, C1-C10 alkyl, halogenated C1-C10 alkyl, and halogen, and more preferably from the group consisting of hydrogen, C1-C6 alkyl, halogenated C1-C6 alkyl, and halogen;
each M is nickel;
each Y is O;
each X is independently selected from the group consisting of fluorine, chlorine and bromine; and
each R₁₁ is independently a C1-C20 alkyl with or without a substituent, preferably a C1-C10 alkyl with or without a substituent, and more preferably a C1-C6 alkyl with or without a substituent;
preferably, the substituent is independently selected from the group consisting of halogen, hydroxy, C1-C6 alkyl, halogenated C1-C6 alkyl, C1-C6 alkoxy and halogenated C1-C6 alkoxy.

According to another embodiment of the present invention, the metal complex has a structure represented by formula III: 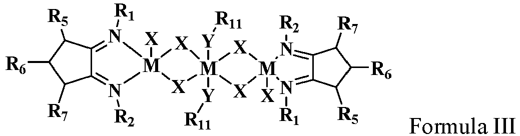 wherein, R₅-R₇ are each independently selected from the group consisting of hydrogen, halogen, hydroxy, and C1-C20 hydrocarbyl with or without a substituent, and R₅-R₇ are optionally joined to form a ring or ring system; R₁, R₂, R₁₁, Y, M and X are as defined above for Formula I.

Preferably, the metal complex has a structure represented by formula IV: 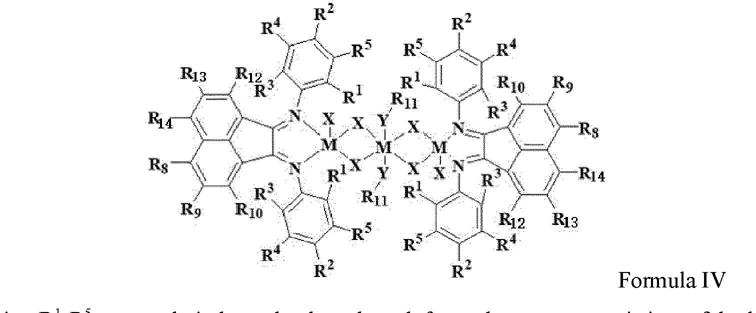 wherein, R¹-R⁵ are each independently selected from the group consisting of hydrogen, halogen, C1-C6 alkyl with or without a substituent, and C1-C6 alkoxy with or without a substituent; R₈-R₁₀ and R₁₂-R₁₄ are each independently selected from the group consisting of hydrogen, halogen, C1-C6 alkyl, and C1-C6 alkoxy; each M is nickel; each Y is O; each X is independently a halogen; and each R₁₁ is independently a C1-C6 alkyl with or without a substituent.

Further preferably, the metal complex is one or more selected from the group consisting of:
the complex represented by Formula IV, wherein R¹=R³=ethyl, R²=R⁴=R⁵=R₈-R₁₀=R₁₂-R₁₄=H, R₁₁=methyl, M=Ni, Y=O, X=Br;
the complex represented by Formula IV, wherein R¹=R³=methyl, R²=R⁴=R⁵=R₈-R₁₀=R₁-R₁₄=H, R₁₁=methyl, M=Ni, Y=O, X=Br;
the complex represented by Formula IV, wherein R¹-R³=methyl, R⁴=R⁵=R₈-R₁₀=R₁₂-R₁₄=H, R₁₁=methyl, M=Ni, Y=O, X=Br;
the complex represented by Formula IV, wherein R¹=R³=methyl, R²=Br, R⁴=R⁵=R₈-R₁₀=R₁₂-R₁₄=H, R₁₁=methyl, M=Ni, Y=O, X=Br;
the complex represented by Formula IV, wherein R¹=R³=Br, R²=R⁴=R⁵=R₈-R₁₀=R₁₂-R₁₄=H, R₁₁=methyl, M=Ni, Y=O, X=Br;
the complex represented by Formula IV, wherein R¹=R³=Cl, R²=R⁴=R⁵=R₈-R₁₀=R₁₂-R₁₄=H, R₁₁=methyl, M=Ni, Y=O, X=Br;
the complex represented by Formula IV, wherein R¹=R³=F, R²=R⁴=R⁵=R₈-R₁₀=R₁₂-R₁₄=H, R₁₁=methyl, M=Ni, Y=O, X=Br;
the complex represented by Formula IV, wherein R¹=R³=ethyl, R²=R⁴=R⁵=R₈-R₁₀=R₁₂-R₁₄=H, R₁₁=ethyl, M=Ni, Y=O, X=Br;
the complex represented by Formula IV, wherein R¹=R³=methyl, R²=R⁴=R⁵=R₈-R₁₀=R₁₂-R₁₄=H, R₁₁=ethyl, M=Ni, Y=O, X=Br;
the complex represented by Formula IV, wherein R¹-R³=methyl, R⁴=R⁵=R₈-R₁₀=R₁₂-R₁₄=H, R₁₁=ethyl, M=Ni, Y=O, X=Br;
the complex represented by Formula IV, wherein R¹=R³=methyl, R²=Br, R⁴=R⁵=R₈-R₁₀=R₁₂-R₁₄=H, R₁₁=ethyl, M=Ni, Y=O, X=Br;
the complex represented by Formula IV, wherein R¹=R³=Br, R²=R⁴=R⁵=R₈-R₁₀=R₁₂-R₁₄=H, R₁₁=ethyl, M=Ni, Y=O, X=Br;
the complex represented by Formula IV, wherein R¹=R³=Cl, R²=R⁴=R⁵=R₈-R₁₀=R₁₂-R₁₄=H, R₁₁=ethyl, M=Ni, Y=O, X=Br;
the complex represented by Formula IV, wherein R¹=R³=F, R²=R⁴=R⁵=R₈-R₁₀=R₁₂-R₁₄=H, R₁₁=ethyl, M=Ni, Y=O, X=Br;
the complex represented by Formula IV, wherein R¹=R³=ethyl, R²=R⁴=R⁵=R₈-R₁₀=R₁₂-R₁₄=H, R₁₁=isobutyl, M=Ni, Y=O, X=Br;
the complex represented by Formula IV, wherein R¹=R³=methyl, R²=R⁴=R⁵=R₈-R₁₀=R₁₂-R₁₄=H, R₁₁=isobutyl, M=Ni, Y=O, X=Br;
the complex represented by Formula IV, wherein R¹-R³=methyl, R⁴=R⁵=R₈-R₁₀=R₁₂-R₁₄=H, R₁₁=isobutyl, M=Ni, Y=O, X=Br;
the complex represented by Formula IV, wherein R¹=R³=methyl, R²=Br, R⁴=R⁵=R₈-R₁₀=R₁₂-R₁₄=H, R₁₁=isobutyl, M=Ni, Y=O, X=Br;
the complex represented by Formula IV, wherein R¹=R³=Br, R²=R⁴=R⁵=R₈-R₁₀=R₁₂-R₁₄=H, R₁₁=isobutyl, M=Ni, Y=O, X=Br;
the complex represented by Formula IV, wherein R¹=R³=Cl, R²=R⁴=R⁵=R₈-R₁₀=R₁₂-R₁₄=H, R₁₁=isobutyl, M=Ni, Y=O, X=Br;
the complex represented by Formula IV, wherein R¹=R³=F, R²=R⁴=R⁵=R₈-R₁₀=R₁₂-R₁₄=H, R₁₁=isobutyl, M=Ni, Y=O, X=Br;
the complex represented by Formula IV, wherein R¹=R³=ethyl, R²=R⁴=R⁵=R₁₂=R₁₃=R₉=R₁₀=H, R₁₄=R₈=methyl, R₁₁=ethyl, M=Ni, Y=O, X=Br;
the complex represented by Formula IV, wherein R¹=R³=methyl, R²=R⁴=R⁵=R₁₂=R₁₃=R₉ =R₁₀=H, R₁₄=R₈=methyl, R₁₁=ethyl, M=Ni, Y=O, X=Br;
the complex represented by Formula IV, wherein R-R³=methyl, R⁴=R⁵=R₁₂=R₁₃=R₉=R₁₀=H, R₁₄=R₈=methyl, R₁₁=ethyl, M=Ni, Y=O, X=Br;
the complex represented by Formula IV, wherein R¹=R³=methyl, R²=Br, R⁴=R⁵=R₁₂=R₁₃=R₉=R₁₀=H, R₁₄=R₈=methyl, R₁₁=ethyl, M=Ni, Y=O, X=Br;
the complex represented by Formula IV, wherein R¹=R³=Br, R²=R⁴=R⁵=R₁₂=R₁₃=R₉ =R₁₀=H, R₁₄=R₈=methyl, R₁₁=ethyl, M=Ni, Y=O, X=Br;
the complex represented by Formula IV, wherein R¹=R³=Cl, R²=R⁴=R⁵=R₁₂=R₁₃=R₉=R₁₀=H, R₁₄=R₈=methyl, R₁₁=ethyl, M=Ni, Y=O, X=Br; and
the complex represented by Formula IV, wherein R¹=R³=F, R²=R⁴=R⁵=R₁₂=R₁₃=R₉=R₁₀=H, R₁₄=R₈=methyl, R₁₁=ethyl, M=Ni, Y=O, X=Br.

According to another embodiment of the present invention, the metal complex has a structure represented by formula V: 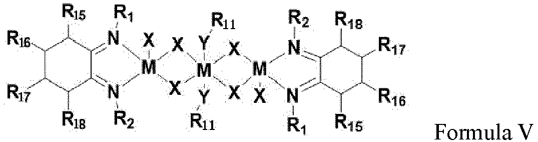 wherein, R₁₅ to R₁₈ are each independently selected from the group consisting of hydrogen, halogen, hydroxy, and C1-C20 hydrocarbyl with or without a substituent, and R₁₅ to R₁₈ are optionally joined to form a ring or ring system; and R₁, R₂, R₁₁, Y, M, X are as defined above for Formula I.

Preferably, the metal complex has a structure represented by formula VI: 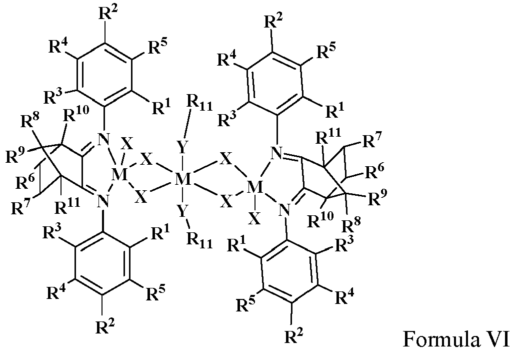 wherein, R¹ to R¹¹ are each independently selected from the group consisting of hydrogen, halogen, hydroxy, C1-C10 linear alkyl with or without a substituent, C3-C10 branched alkyl with or without a substituent, C3-C10 cycloalkyl with or without a substituent, C1-C10 linear alkoxy with or without a substituent, C3-C10 branched alkoxy with or without a substituent, C3-C10 cycloalkoxy with or without a substituent, C6-C15 aryl with or without a substituent, C7-C15 aralkyl with or without a substituent, and C7-C15 alkaryl with or without a substituent; and R₁₁, Y, M, X are as defined above for Formula I.

Further preferably, the metal complex is one or more selected from the group consisting of:
the diimine-metal complex represented by Formula VI, wherein R¹=R³=methyl, R²=R⁴-R⁷=R¹⁰=H, R⁸=R⁹=R¹¹=R₁₁=methyl, M=Ni, Y=O, X=Br;
the diimine-metal complex represented by Formula VI, wherein R¹=R³=ethyl, R²=R⁴-R⁷=R¹⁰=H, R⁸=R⁹=R¹¹=R₁₁=methyl, M=Ni, Y=O, X=Br;
the diimine-metal complex represented by Formula VI, wherein R¹-R³=methyl, R⁴-R⁷=R¹⁰=H, R⁸=R⁹=R¹¹=R₁₁=methyl, M=Ni, Y=O, X=Br;
the diimine-metal complex represented by Formula VI, wherein R¹=R³=methyl, R²=Br, R⁴-R⁷=R¹⁰=H, R⁸=R⁹=R¹¹=R₁₁=methyl, M=Ni, Y=O, X=Br;
the diimine-metal complex represented by Formula VI, wherein R¹=R³=F, R²=R⁴-R⁷=R¹⁰=H, R⁸=R⁹=R¹¹=R₁₁=methyl, M=Ni, Y=O, X=Br;
the diimine-metal complex represented by Formula VI, wherein R¹=R³=Cl, R²=R⁴-R⁷=R¹⁰=H, R⁸=R⁹=R¹¹=R₁₁=methyl, M=Ni, Y=O, X=Br;
the diimine-metal complex represented by Formula VI, wherein R¹=R³=Br, R²=R⁴-R⁷=R¹⁰=H, R⁸=R⁹=R¹¹=R₁₁=methyl, M=Ni, Y=O, X=Br;
the diimine-metal complex represented by Formula VI, wherein R¹=R³=methyl, R²=R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹=R³=ethyl, R²=R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹-R³=methyl, R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹=R³=methyl, R²=Br, R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹=R³=F, R²=R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹=R³=Cl, R²=R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹=R³=Br, R²=R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹=R³=methyl, R²=R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹=R³=ethyl, R²=R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹-R³=methyl, R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹=R³=methyl, R²=Br, R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹=R³=F, R²=R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹=R³=Cl, R²=R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹=R³=Br, R²=R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹=R³=methyl, R²=R⁴-R⁷=R¹⁰=H, R⁸=R⁹=methyl, R¹¹=bromomethyl, R₁₁=ethyl, M=Ni, Y=O, X=Br;
the diimine-metal complex represented by Formula VI, wherein R¹=R³=ethyl, R²=R⁴-R⁷=R¹⁰=H, R⁸=R⁹=methyl, R¹¹=bromomethyl, R₁₁=ethyl, M=Ni, Y=O, X=Br;
the diimine-metal complex represented by Formula VI, wherein R¹-R³=methyl, R⁴-R⁷=R¹⁰=H, R⁸=R⁹=methyl, R¹¹=bromomethyl, R₁₁=ethyl, M=Ni, Y=O, X=Br;
the diimine-metal complex represented by Formula VI, wherein R¹=R³=methyl, R²=Br, R⁴-R⁷=R¹⁰=H, R⁸=R⁹=methyl, R¹¹=bromomethyl, R₁₁=ethyl, M=Ni, Y=O, X=Br;
the diimine-metal complex represented by Formula VI, wherein R¹=R³=F, R²=R⁴-R⁷=R¹⁰=H, R⁸=R⁹=methyl, R¹¹=bromomethyl, R₁₁=ethyl, M=Ni, Y=O, X=Br;
the diimine-metal complex represented by Formula VI, wherein R¹=R³=Cl, R²=R⁴-R⁷=R¹⁰=H, R⁸=R⁹=methyl, R¹¹=bromomethyl, R₁₁=ethyl, M=Ni, Y=O, X=Br; and
the diimine-metal complex represented by Formula VI, wherein R¹=R³=Br, R²=R⁴-R⁷=R¹⁰=H, R⁸=R⁹=methyl, R¹¹=bromomethyl, R₁₁=ethyl, M=Ni, Y=O, X=Br.

According to the invention, the metal complex can be prepared by a method comprising: reacting a diimine compound represented by Formula VII with MXₙ and R₁₁YH to form the diimine-metal complex represented by Formula I, 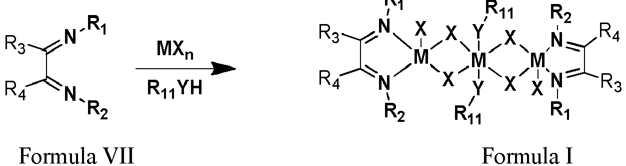
wherein R₁, R₂, R₃ and R₄ in Formula VII have the same definitions as in Formula I;
M and X in the MXₙ have the same definitions as in Formula I, n is the number of X satisfying the valence state of M;
Y and R₁₁ in the R₁₁YH have the same definitions as in Formula I.

The reaction in the above method is carried out in an organic solvent, and the organic solvent is preferably a halogenated alkane, and more preferably the organic solvent is one or more selected from dichloromethane, trichloromethane and 1,2-dichloroethane. The reaction is carried out at a temperature of 15 to 40 °C.

In the present invention, examples of the MXₙ include nickel halides, such as nickel bromide and nickel chloride, 1,2-dimethoxyethane nickel halides, such as 1,2-dimethoxyethane nickel bromide and 1,2-dimethoxyethane nickel chloride.

According to the invention, the catalyst system further comprises a cocatalyst, which is a reagent that can promote the catalysis olefin polymerization, and which can be selected from the group consisting of organoaluminum compounds and/or organoboron compounds.

In the invention, the organoaluminum compounds are at least one selected from the group consisting of alkylaluminoxanes, alkylaluminums and alkyl aluminum halides. The alkylaluminums and the alkyl aluminum halides may be represented by a general formula of AlRₙX¹₃₋ₙ, in which R is H, a C1-C20 hydrocarbyl or a C1-C20 hydrocarbyloxy, preferably a C1-C20 alkyl, a C1-C20 alkoxy, a C7-C20 aralkyl or a C6-C20 aryl; X¹ is a halogen, preferably chlorine or bromine; and 0<n≤3.

According to the invention, specific examples of the organoaluminum compound include, but are not limited to, trimethylaluminum, triethylaluminum, triisobutylaluminum, tri-n-hexylaluminum, trioctylaluminum, diethyl aluminum hydride, diisobutyl aluminum hydride, diethyl aluminum chloride, diisobutyl aluminum chloride, ethyl aluminum sesquichloride, methyl aluminum sesquichloride, ethyl aluminum dichloride, methylaluminoxane (MAO), and modified methyl aluminoxane (MMAO).

According to the invention, the organoboron compound is selected from the group consisting of aromatic hydrocarbyl boron compounds and/or borates. The aromatic hydrocarbyl boron compounds are preferably substituted or unsubstituted phenyl boron, and more preferably tris(pentafluorophenyl)boron. The borates are preferably N,N-dimethylanilinium tetrakis(pentafluorophenyl)borate and/or triphenylcarbonium tetrakis(pentafluorophenyl)borate.

According to the invention, when the cocatalyst is an organoaluminum compound, the molar ratio of aluminum in the co-catalyst to M in the main catalyst is (10-10⁷):1, for example, 10:1, 20:1, 50:1, 100:1, 200:1, 300:1, 500:1, 700:1, 800:1, 1,000:1, 2,000:1, 3,000:1, 5,000:1, 10,000:1, 100,000:1, 1,000,000:1, 10,000,000:1, and any value therebetween, preferably (10-100,000):1, and more preferably (100-10,000): 1.

When the cocatalyst is an organoboron compound and an organoaluminum compound, the molar ratio of boron in the cocatalyst to M in the main catalyst is (0.1-1,000): 1, for example, 0.1:1, 0.2:1, 0.5:1, 1:1, 2:1, 3:1, 5:1, 8:1, 10:1, 20:1, 50:1, 100:1, 200:1, 300:1, 500:1, 700:1, 800:1, 1,000:1, and any value therebetween, preferably (0.1-500):1, and the molar ratio of the organoaluminum to M in the main catalyst is (10-10'):1, for example, 10:1, 20:1, 50:1, 100:1, 200:1, 300:1, 400:1, 500:1, 600:1, 700:1, 800:1, 1,000:1, 2,000:1, 3,000:1, 5,000:1, 10,000:1, 100,000:1, and any value therebetween, preferably (10-5,000):1, and more preferably (10-1,000):1.

The symbols used in different general formulae or structural formulae in the present application, such as R¹, R², R³, R⁴, R⁵, R₁, R₂, R₁₁, R₁₂, X, M, Y, etc., are used in the same meaning in the individual general formulae or structural formulae unless otherwise specified.

In the invention, C1-C20 alkyl refers to C1-C20 linear alkyl or C3-C20 branched alkyl, including but not limited to: methyl, ethyl, n-propyl, isopropyl, n-butyl, sec-butyl, isobutyl, tert-butyl, n-pentyl, isopentyl, tert-amyl, neopentyl, n-hexyl, n-heptyl, n-octyl and n-decyl.

Examples of C3-C20 cycloalkyl include, but are not limited to, cyclopropyl, cyclopentyl, cyclohexyl, 4-methylcyclohexyl, 4-ethylcyclohexyl, 4-n-propylcyclohexyl, and 4-n-butylcyclohexyl.

Examples of C6-C20 aryl include, but are not limited to, phenyl, 4-methylphenyl, 4-ethylphenyl, dimethylphenyl, and vinylphenyl.

C2-C20 alkenyl refers to C2-C20 linear alkenyl or C3-C20 branched alkenyl, including but not limited to, vinyl, allyl, and butenyl.

Examples of C7-C20 aralkyl include, but are not limited to, phenylmethyl, phenylethyl, phenyl-n-propyl, phenylisopropyl, phenyl-n-butyl, and phenyl-tert-butyl.

Examples of C7-C20 alkaryl include, but are not limited to, tolyl, ethylphenyl, n-propylphenyl, isopropylphenyl, n-butylphenyl, and t-butylphenyl.

In the invention, when the olefin is polymerized, the olefin, the diamine-metal complex and the cocatalyst can react with each other in an inert solvent, or a bulk polymerization can be carried out directly in the olefin. The reaction time may be from 0.5 to 72 hours, and the reaction temperature may be from -50 to 200 °C, preferably from 30 to 100 °C.

The inert solvent can be an alkane, an aromatic hydrocarbon or a halogenated hydrocarbon. The alkanes are preferably C5-C20 saturated hydrocarbons, such as hexane and heptane; the halogenated hydrocarbons can be dichloromethane, 1,2-dichloroethane, and 1,1,2,2-tetrachloroethane; and the aromatic hydrocarbons can be toluene and xylene.

As used herein, the term "internal olefin" refers to an olefin whose double bond is not at a terminal position. The internal olefin feedstock useful in the present invention may be a mixture of isomers having the same carbon number or a single internal olefin. For example, the internal butene can be cis-2-C4 olefin or trans-2-C4 olefin, or a mixture of cis-2-C4 olefin and trans-2-C4 olefin. The internal olefin feedstock useful in the present invention may also be a mixture of internal olefins having different carbon numbers.

As used herein, the term "terminal olefin" (also referred to as alpha-olefin) refers to an olefin whose double bond is at a terminal position, such as 1-butene.

According to the third aspect, the present invention provides use of the above-described branched olefin polymer or the branched olefin polymer obtained by the above-described preparation method, including use:
(1) as a processing aid for resins;
(2) as a plasticizer; and
(3) in a hot-melt adhesive.

A notable feature of the branched olefin polymer of the present invention is that the molecular weight distribution of the bimodal polymer is narrow, ranging from 3.5 to 6.0, but it can be seen from the GPC trace that the obtained polymer is a bimodal branched polyolefin. This feature makes the branched olefin polymer of the present invention microscopically different from ordinary linear polymers, and more suitable for use as a processing aid for resins, as a plasticizer or in a hot-melt adhesive, or directly as a plastomer materials.

### Examples

The present invention will be further illustrated below with reference to examples, but the scope of the present invention is not limited to these examples.

The analytical characterization instruments used in the following examples and comparative examples are as follows:
1. Nuclear magnetic resonance instrument: Bruker DMX 300 (300MHz), with tetramethyl silicon (TMS) as the internal standard.
2. Molecular weight and molecular weight distribution PDI (PDI=Mw/Mn) of polymer: measured by PL-GPC220 chromatograph, with trichlorobenzene as solvent, at 150°C (standard sample: PS; flow rate: 1.0mL/min; Columns: 3×PLgel 10um M1×ED-B 300×7.5nm).
3. Structure analysis of complex: single crystal test analysis, using Rigaku RAXIS Rapid IP diffractometer.
4. Activity measurement method: polymer weight (g) / nickel (mol) × 2.
5. Chain structure analysis of polymer: measured through ¹H NMR and ¹³C NMR spectra recorded on a 400MHz Bruker Avance 400 nuclear magnetic resonance spectrometer, using a 10mm PASEX 13 probe, with the polymer sample being dissolved in 1,2,4-trichlorobenzene at 150°C.
6. The melting point of the polymer was determined by differential scanning calorimetry (DSC): 10 mg of the sample was placed in a crucible and measured on a Pekin Elmer DSC 8500 Differential Scanning Calorimeter. Under nitrogen atmosphere, the temperature was increased from -100°C to 180°C at a heating rate of 10°C/min, held for 1 min, lowered to -100°C at a rate of 10°C/min, held for 3 min, and then raised to 180°C at a heating rate of 10°C/min. The second heating scan data were recorded.

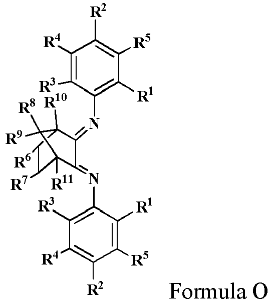

### Example 1

Preparation of Complex Ni₁ (represented by Formula VI, wherein R¹, R³ are ethyl; R², R⁴, R⁵, R⁶, R⁷, R¹⁰ are hydrogen; R⁸, R⁹, R¹¹ are methyl; R₁₁ is ethyl; M is nickel; Y is O; and X is Br):
Preparation of Ligand L₁ (represented by Formula O, wherein R¹, R³ are ethyl, R², R⁴, R⁵, R⁶, R⁷, R¹⁰ are hydrogen, and R⁸, R⁹, R¹¹ are methyl): Under nitrogen atmosphere, 2,6-diethylaniline (2.0 ml, 12 mmol) was dissolved in 20 ml of toluene, and 12 ml of trimethylaluminum (1.0M, 12 mmol) was added dropwise at normal temperature. The reaction was refluxed for 2 hours, and the system was then cooled to room temperature. Camphorquinone (0.831 g, 5 mmol) was added thereto, and the system was refluxed for 6h. The reaction product was neutralized with aqueous sodium hydroxide solution, extracted with dichloromethane, dried over anhydrous magnesium sulfate, and then subjected to a column chromatography to afford yellow ligand L₁. Yield: 69.2 %. ¹H-NMR (CDCls): δ6.94-6.92 (m, 6H, C_{Ar}-CH₃), 2.56-2.51 (m, 4H, C_{Ar}-CH₃), 2.36-2.31 (m, 4H, C_{Ar}-CH₃), 1.82-1.78 (m, 4H, CH₂), 1.54 (m, 1H), 1.24-1.18 (m, 12H), 1.09 (s, 3H, CH₃), 0.94 (m, 6H, CH₃).

A solution of 0.277 g (0.9 mmol) of (DME)NiBr₂ (wherein DME represents ethylene glycol dimethyl ether) in ethanol (10 mL) was added slowly dropwise to a solution of 0.258 g (0.6 mmol) of ligand L₁ in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₁ as brownish-red powdery solids. Yield: 78.2 %. Elemental analysis (calculated for C₆₄H₉₀Br₆N₄Ni₃O₂): C, 47.96; H, 5.66; N, 3.50; experimental value (%): C, 47.48; H, 6.00; N, 3.26.

After having been continuously dried at 130°C for 2hrs, a 1L stainless steel polymerization autoclave equipped with mechanical stirring was evacuated while hot and then filled with N₂ gas 3 times. 400 mL of hexane and 100 mL of 2-octene were charged into the polymerization autoclave, and then 5.0 mL of methylaluminoxane (MAO) (1.53 mol/l solution in toluene) was added, followed by the addition of 4.0 mg (2.5 µmol) of complex Ni₁. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below.

### Example 2

After having been continuously dried at 130°C for 2hrs, a 1L stainless steel polymerization autoclave equipped with mechanical stirring was evacuated while hot and then filled with N₂ gas 3 times. 440 mL of hexane and 80 mL of 2-octene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₁. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below.

### Example 3

After having been continuously dried at 130°C for 2hrs, a 1L stainless steel polymerization autoclave equipped with mechanical stirring was evacuated while hot and then filled with N₂ gas 3 times. 380 mL of hexane and 120 mL of 2-octene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₁. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below.

### Example 4

After having been continuously dried at 130°C for 2hrs, a 1L stainless steel polymerization autoclave equipped with mechanical stirring was evacuated while hot and then filled with N₂ gas 3 times. 320 mL of hexane, 130 mL of 2-octene and 130 mL of 1-hexadecene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₁. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below. It was found that the polymer contained 64.8 methyl branches, 4.4 ethyl branches, 2.6 propyl branches, 2.2 butyl branches, 1.6 pentyl branches, 13.8 branches having 6 or more carbon atoms, per 1000 carbon atoms.

### Comparative Example 1

After having been continuously dried at 130°C for 2hrs, a 1L stainless steel polymerization autoclave equipped with mechanical stirring was evacuated while hot and then filled with N₂ gas 3 times. 500 mL of hexane was charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₁. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below.

### Comparative Example 2

After having been continuously dried at 130°C for 2hrs, a 1L stainless steel polymerization autoclave equipped with mechanical stirring was evacuated while hot and then filled with N₂ gas 3 times. 320 mL of hexane and 180 mL of 1-octene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₁. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below.

### Example 5

Preparation of Complex Ni₂ (represented by Formula VI, wherein R¹, R³ are fluorine; R², R⁴, R⁵, R⁶, R⁷, R¹⁰ are hydrogen; R⁸, R⁹, R¹¹ are methyl; R₁₁ is ethyl; M is nickel; Y is O; and X is Br):
Preparation of Ligand L₂ (represented by Formula O, wherein R¹, R³ are fluorine; R², R⁴, R⁵, R⁶, R⁷, R¹⁰ are hydrogen; and R⁸, R⁹, R¹¹ are methyl): Under nitrogen atmosphere, 2,6-difluoro-aniline (1.3 ml, 12 mmol) was dissolved in 20 ml of toluene, and 12 ml of trimethylaluminum (1.0M, 12 mmol) was added dropwise at normal temperature. The reaction was refluxed for 2 hours, and the system was then cooled to room temperature. Camphorquinone (0.831 g, 5 mmol) was added thereto, and the system was refluxed for 6h. The reaction product was neutralized with aqueous sodium hydroxide solution, extracted with dichloromethane, and dried, and then subjected to a column chromatography to afford yellow ligand L₂. Yield: 50.3%. ¹HNMR (CDCl₃): δ [with an isomer ratio of 1.2:1]: major isomer: 6.83-6.74 (m, 6H, C_{Ar}-CH₃), 1.93-1.90 (m, 4H, CH₂), 1.55 (m, 1Hl), 1.26 (s, 3H, CH₃), 1.06 (s, 6H, CH₃); minor isomer: 6.91-6.84 (m, 6H, C_{Ar}-CH₃), 1.96-1.94 (m, 4H, CH₂), 1.55 (m, 1H), 1.26 (s, 3H, CH₃), 1.02 (s, 6H, CH₃).

A solution of 0.277 g (0.9 mmol) of (DME)NiBr₂ in ethanol (10 mL) was added slowly dropwise to a solution of 0.233 g (0.6 mmol) of ligand L₂ in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₂ as brownish-red powdery solids. Yield: 74.3 %. Elemental analysis (calculated for C₄₈H₅₀Br₆F₈N₄Ni₃O₂): C, 37.87; H, 3.31; N, 3.68; experimental value (%): C, 37.78; H, 3.62; N, 3.28.

After having been continuously dried at 130°C for 2hrs, a 1L stainless steel polymerization autoclave equipped with mechanical stirring was evacuated while hot and then filled with N₂ gas 3 times. 400 mL of hexane and 100 mL of 2-octene were charged into the polymerization autoclave, and then 5.0 mL of methylaluminoxane (MAO) (1.53 mol/l solution in toluene) was added, followed by the addition of 3.8 mg (2.5 µmol) of complex Ni₂. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below.

### Example 6

Preparation of complex Ni₃ (represented by Formula VI, wherein R¹, R², R³ are methyl; R⁴, R⁵, R⁶, R⁷, R¹⁰ are hydrogen; R⁸, R⁹, R¹¹ are methyl; R₁₁ is ethyl; M is nickel; Y is O; and X is Br):
Preparation of ligand L₃ (represented by Formula O, wherein R¹, R², R³ are methyl; R⁴, R⁵, R⁶, R⁷, R¹⁰ are hydrogen; and R⁸, R⁹, R¹¹ are methyl): Under nitrogen atmosphere, 2,4,6-trimethyl-aniline (1.7 ml, 12 mmol) was dissolved in 20 ml of toluene, and 12 ml of trimethylaluminum (1.0M, 12 mmol) was added dropwise at normal temperature. The reaction was refluxed for 2 hours, and the system was then cooled to room temperature. Camphorquinone (0.831 g, 5 mmol) was added thereto, and the system was refluxed for 6h. The reaction product was neutralized with aqueous sodium hydroxide solution, extracted with dichloromethane, and dried, and then subjected to a column chromatography to afford yellow ligand L₃. Yield: 62.5%. ¹HNMR (300 MHz, CDCl₃), δ (ppm) [with an isomer ratio of 1.2:1]: major isomer: 6.72 (s, 4H, Ar-H), 2.26-2.13 (m, 12H, C_{Ar}-CH₃), 1.87 (s, 6H, C_{Ar}-CH₃), 1.79 (m, 4H, CH₂), 1.42 (m, 1H), 1.26 (s, 3H, CH₃), 1.07 (s, 6H,CH₃); minor isomer: 6.67 (s, 4H, Ar-H), 2.09-2.01 (m, 12H, C_{Ar}-CH₃), 1.85 (s, 6H, C_{Ar}-CH₃), 1.79 (m, 4H, CH₂), 1.40 (m, 1H), 1.26 (s, 3H, CH₃), 0.94 (s, 6H, CH₃).

A solution of 0.277 g (0.9 mmol) of (DME)NiBr₂ in ethanol (10 mL) was added slowly dropwise to a solution of 0.240 g (0.6 mmol) of ligand L₃ in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₂ as brownish-red powdery solids. Yield: 78.6 %. Elemental analysis (calculated for C₆₀H₈₂Br₆N₄Ni₃O₂): C, 46.59; H, 5.34; N, 3.62; experimental value (%): C, 46.24; H, 5.67; N, 3.21.

After having been continuously dried at 130°C for 2hrs, a 1L stainless steel polymerization autoclave equipped with mechanical stirring was evacuated while hot and then filled with N₂ gas 3 times. 440 mL of hexane and 60 mL of 2-octene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0µmol) of N,N-dimethylanilinium tetrakis(pentafluorophenyl)borate were added thereto, followed by the addition of 3.9 mg (2.5 µmol) of complex Ni₃. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below. It was found that the obtained polymer had a glass transition temperature of -65.8 °C. It was known from the ¹³CNMR spectrum of the obtained polymer that the polymer contained 60 methyl branches, 4.8 ethyl branches, 3.0 propyl branches, 2.9 butyl branches, 3.5 pentyl branches, 7.9 branches having 6 or more carbon atoms, per 1000 carbon atoms.

### Example 7

After having been continuously dried at 130°C for 2hrs, a 1L stainless steel polymerization autoclave equipped with mechanical stirring was evacuated while hot and then filled with N₂ gas 3 times. 440 mL of hexane, 30 mL of 2-octene and 30 mL of 1-hexadecene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 3.9 mg (2.5 µmol) of complex Ni₃. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below.

### Example 8

After having been continuously dried at 130°C for 2hrs, a 1L stainless steel polymerization autoclave equipped with mechanical stirring was evacuated while hot and then filled with N₂ gas 3 times. 380 mL of hexane, 60 mL of 2-octene and 60 mL of 1-hexadecene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 3.9 mg (2.5 µmol) of complex Ni₃. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below. It was found that the polymer contained 54.3 methyl branches, 5.4 ethyl branches, 3.8 propyl branches, 3.5 butyl branches, 3.2 pentyl branches, 11.2 branches having 6 or more carbon atoms, per 1000 carbon atoms.

### Example 9

After having been continuously dried at 130°C for 2hrs, a 1L stainless steel polymerization autoclave equipped with mechanical stirring was evacuated while hot and then filled with N₂ gas 3 times. 320 mL of hexane, 90 mL of 2-octene and 90 mL of 1-hexadecene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 3.9 mg (2.5 µmol) of complex Ni₃. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below.

### Example 10

After having been continuously dried at 130°C for 2hrs, a 1L stainless steel polymerization autoclave equipped with mechanical stirring was evacuated while hot and then filled with N₂ gas 3 times. 320 mL of hexane, 90 mL of 2-octene and 90 mL of 1-hexadecene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 3.9 mg (2.5 µmol) of complex Ni₃. The reaction was vigorously stirred at 80 °C for 30 minutes, with ethylene pressure being maintained at 10 atm. The reaction mixture was neutralized with an ethanol solution acidified with 5 wt% hydrochloric acid to obtain a polymer. The results are shown in Table 1 below. It was found that the obtained polymer had a melting point of 0.28 °C and a glass transition temperature of -55.63 °C.

### Comparative Example 3

After having been continuously dried at 130°C for 2hrs, a 1L stainless steel polymerization autoclave equipped with mechanical stirring was evacuated while hot and then filled with N₂ gas 3 times. 500 mL of hexane was charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 3.9 mg (2.5 µmol) of complex Ni₃. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below.

### Comparative Example 4

After having been continuously dried at 130°C for 2hrs, a 1L stainless steel polymerization autoclave equipped with mechanical stirring was evacuated while hot and then filled with N₂ gas 3 times. 320 mL of hexane and 180 mL of 1-octene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 3.9 mg (2.5 µmol) of complex Ni₃. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below.

### Example 11

Preparation of complex Ni₄ (represented by Formula VI, wherein R¹, R³ are methyl; R² is Br; R⁴, R⁵, R⁶, R⁷, R¹⁰ are hydrogen; R⁸, R⁹, R¹¹ are methyl; R₁₁ is ethyl; M is nickel; Y is O; and X is Br):
Preparation of ligand L₄ (represented by Formula O, wherein R¹, R³ are methyl; R² is Br; R⁴, R⁵, R⁶, R⁷, R¹⁰ are hydrogen; and R⁸, R⁹, R¹¹ are methyl): Under nitrogen atmosphere, 2,6-dimethyl-4-bromo-aniline (2.45 g, 12 mmol) was dissolved in 20 ml of toluene, and 12 ml of trimethylaluminum (1.0M, 12 mmol) was added dropwise at normal temperature. The reaction was refluxed for 2 hours, and the system was then cooled to room temperature. Camphorquinone (0.831 g, 5 mmol) was added thereto, and the system was refluxed for 6h. The reaction product was neutralized with aqueous sodium hydroxide solution, extracted with dichloromethane, and dried, and then subjected to a column chromatography to afford yellow ligand L₄. Yield: 60.7%. ¹HNMR (300 MHz, CDCl₃), δ (ppm) [with an isomer ratio of 1.1:1]: major isomer: 7.05 (s, 4H, Ar-H), 2.18 (m, 12H, C_{Ar}-CH₃), 1.85 (m, 4H, CH₂), 1.37 (m, 1H), 1.26 (s, 3H, CH₃), 1.06 (s, 6H, CH₃); minor isomer: 7.02 (s, 4H, Ar-H), 2.04 (m, 12H, C_{Ar}-CH₃), 1.85 (m, 4H, CH₂), 1.37 (m, 1H), 1.26 (s, 3H, CH₃), 0.96 (s, 6H, CH₃).

A solution of 0.278 g (0.9 mmol) of (DME)NiBr₂ in ethanol (10 mL) was added slowly dropwise to a solution of 0.477 g (0.9 mmol) of ligand L₄ in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₄ as brownish-red powdery solids. Yield: 74.1 %. Elemental analysis (calculated for C₅₆H₇₀Br₁₀N₄Ni₃O₂): C, 37.24; H, 3.91; N, 3.10; experimental value (%): C, 37.38; H, 4.30; N, 3.03.

After having been continuously dried at 130°C for 2hrs, a 1L stainless steel polymerization autoclave equipped with mechanical stirring was evacuated while hot and then filled with N₂ gas 3 times. 400 mL of hexane, 50 mL of 2-octene and 50 mL of 1-hexadecene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.5 mg (2.5 µmol) of complex Ni₄. The reaction was vigorously stirred at 60 °C for 30 minutes, with ethylene pressure being maintained at 10 atm. The reaction mixture was neutralized with an ethanol solution acidified with 5 wt% hydrochloric acid to obtain a polymer. The results are shown in Table 1 below.

### Example 12

Preparation of complex Ni₅ (represented by Formula IV, wherein R¹, R², R³ are methyl; R⁴, R⁵, R₈-R₁₀, R₁₂-R₁₄ are hydrogen; R₁₁ is ethyl; M is nickel; Y is O; and X is Br):

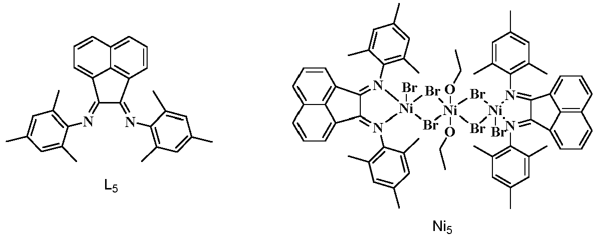

A solution of 0.277 g (0.9 mmol) of (DME)NiBr₂ in ethanol (10 mL) was added slowly dropwise to a solution of 0.249 g (0.6 mmol) of ligand L₅ in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₅ as brownish-red powdery solids. Yield: 84.3 %. Elemental analysis (calculated for C₆₄H₆₆Br₆N₄Ni₃O₂): C, 48.69; H, 4.21; N, 3.55; experimental value (%): C, 48.54; H, 4.47; N, 3.21.

After having been continuously dried at 130°C for 2hrs, a 1L stainless steel polymerization autoclave equipped with mechanical stirring was evacuated while hot and then filled with N₂ gas 3 times. 420 mL of hexane and 80 mL of 2-octene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₅. The reaction was vigorously stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below.

### Example 13

After having been continuously dried at 130°C for 2hrs, a 1L stainless steel polymerization autoclave equipped with mechanical stirring was evacuated while hot and then filled with N₂ gas 3 times. 380 mL of hexane and 120 mL of 2-octene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₅. The reaction was vigorously stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below. It was found that the polymer contained 71.8 methyl branches, 6.4 ethyl branches, 4.2 propyl branches, 3.3 butyl branches, 2.7 pentyl branches, 9.0 branches having 6 or more carbon atoms, per 1000 carbon atoms.

### Example 14

After having been continuously dried at 130°C for 2hrs, a 1L stainless steel polymerization autoclave equipped with mechanical stirring was evacuated while hot and then filled with N₂ gas 3 times. 420 mL of hexane, 40 mL of 2-octene and 40 mL of 1-decene were charged into the polymerization autoclave, and then 1.0 mL of trimethylaluminum (1.0 mol/L solution in heptane), 12.8 mg (25.0 µmol) oftris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₅. The reaction was vigorously stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below.

### Example 15

After having been continuously dried at 130°C for 2hrs, a 1L stainless steel polymerization autoclave equipped with mechanical stirring was evacuated while hot and then filled with N₂ gas 3 times. 380 mL of hexane, 60 mL of 2-octene and 60 mL of 1-decene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₅. The reaction was vigorously stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below.

### Example 16

After having been continuously dried at 130°C for 2hrs, a 1L stainless steel polymerization autoclave equipped with mechanical stirring was evacuated while hot and then filled with N₂ gas 3 times. 420 mL of hexane, 40 mL of 2-octene and 40 mL of 1-hexadecene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₅. The reaction was vigorously stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below. It was found that the obtained polymer had a melting point of 94.9 °C.

### Example 17

After having been continuously dried at 130°C for 2hrs, a 1L stainless steel polymerization autoclave equipped with mechanical stirring was evacuated while hot and then filled with N₂ gas 3 times. 380 mL of hexane, 60 mL of 2-octene and 60 mL of 1-hexadecene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₅. The reaction was vigorously stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below. It was found that the obtained polymer had a melting point of 89.7 °C.

### Comparative Example 5

After having been continuously dried at 130°C for 2hrs, a 1L stainless steel polymerization autoclave equipped with mechanical stirring was evacuated while hot and then filled with N₂ gas 3 times. 500 mL of hexane were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₅. The reaction was vigorously stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below.

### Comparative Example 6

After having been continuously dried at 130°C for 2hrs, a 1L stainless steel polymerization autoclave equipped with mechanical stirring was evacuated while hot and then filled with N₂ gas 3 times. 380 mL of hexane and 120 mL of 1-octene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.0 mg (2.5 µmol) of complex Ni₅. The reaction was vigorously stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below.

### Example 18

Preparation of complex Ni₆ (represented by Formula IV, wherein R¹, R³ are methyl; R², R⁴, R⁵, R₈-R₁₀, R₁₂-R₁₄ are hydrogen; R₁₁ is ethyl; M is nickel; Y is O; and X is Br):

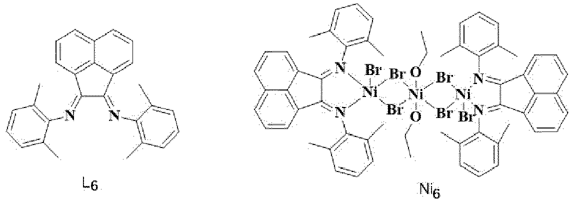

A solution of 0.277 g (0.9 mmol) of (DME)NiBr₂ in ethanol (10 mL) was added slowly dropwise to a solution of 0.233 g (0.6 mmol) of ligand L₆ in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₆ as brownish-red powdery solids. Yield: 78.2 %. Elemental analysis (calculated for C₆₀H₅₈Br₆N₄Ni₃O₂): C, 47.33; H, 3.84; N, 3.68; experimental value (%): C, 47.38; H, 4.00; N, 3.46.

After having been continuously dried at 130°C for 6hrs, a 1L stainless steel polymerization autoclave equipped with mechanical stirring was evacuated while hot and then filled with N₂ gas 3 times. 380 mL of hexane, 60 mL of 2-octene and 60 mL of 1-hexadecene were charged into the polymerization system, then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, and 3.8 mg (2.5 µmol) of complex Ni₂ was added simultaneously. The reaction was stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below.

### Example 19

Preparation of complex Ni₇ (represented by Formula III, wherein R¹, R³ are Br, R², R⁴, R⁵, R₈-R₁₀, R₁₂-R₁₄ are hydrogen, R₁₁ is ethyl, M is nickel, Y is O, and X is Br):

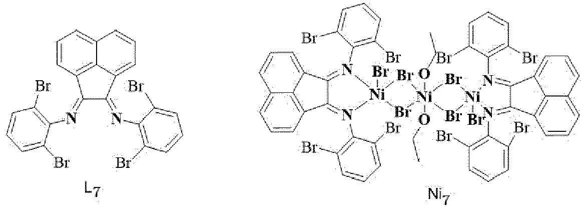

A solution of 0.277 g (0.9 mmol) of (DME)NiBr₂ in ethanol (10 mL) was added slowly dropwise to a solution of 0.389 g (0.6 mmol) of ligand L₇ in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₇ as brownish-red powdery solids. Yield: 74.1 %. Elemental analysis (calculated for C₅₂H₃₄Bri₄N₄Ni₃O₂): C, 30.59; H, 1.68; N, 2.74; experimental value (%): C, 30.72; H, 1.97; N, 2.48.

After having been continuously dried at 130°C for 2hrs, a 1L stainless steel polymerization autoclave equipped with mechanical stirring was evacuated while hot and then filled with N₂ gas 3 times. 380 mL of hexane, 60 mL of 2-octene and 60 mL of 1-hexadecene were charged into the polymerization system, then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, and 5.1 mg (2.5 µmol) of complex Ni-, was added simultaneously. The reaction was vigorously stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below.

### Example 20

Preparation of complex Ni₈ (represented by Formula II, wherein R¹, R³, R₃, R₄ are methyl, R², R⁴, R⁵ are hydrogen, R₁₁ is ethyl, M is nickel, Y is O, and X is Br):

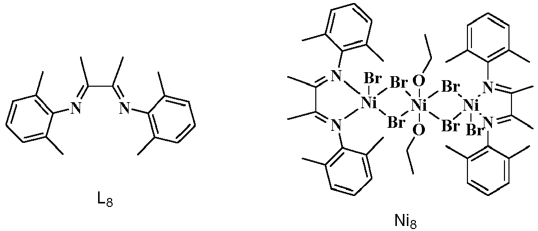

A solution of 0.277 g (0.9 mmol) of (DME)NiBr₂ in ethanol (10 mL) was added slowly dropwise to a solution of 0.175 g (0.6 mmol) of ligand L₈ in dichloromethane (10 mL). The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₈ as brownish-red powdery solids. Yield: 70.2%. Elemental analysis (calculated for C₄₄H₅₈Br₆N₄Ni₃O₂): C, 39.72; H, 4.39; N, 4.21; experimental value (%): C, 39.38; H, 4.60; N, 3.96.

After having been continuously dried at 130°C for 2hrs, a 1L stainless steel polymerization autoclave equipped with mechanical stirring was evacuated while hot and then filled with N₂ gas 3 times. 380 mL of hexane and 120 mL of 2-octene were charged into the polymerization system, then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, and 3.3 mg (2.5 µmol) of complex Ni₈ was added simultaneously. The reaction was stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below.

### Example 21

After having been continuously dried at 130°C for 2hrs, a 1L stainless steel polymerization autoclave equipped with mechanical stirring was evacuated while hot and then filled with N₂ gas 3 times. 380 mL of hexane, 60 mL of 2-octene and 60 mL of 1-decene were charged into the polymerization system, then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, and 3.3 mg (2.5 µmol) of complex Ni₈ was added simultaneously. The reaction was vigorously stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below.

### Example 22

After having been continuously dried at 130°C for 2hrs, a 1L stainless steel polymerization autoclave equipped with mechanical stirring was evacuated while hot and then filled with N₂ gas 3 times. 380 mL of hexane, 60 mL of 2-octene and 60 mL of 1-hexadecene were charged into the polymerization system, then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, and 3.3 mg (2.5 µmol) of complex Ni₈ was added simultaneously. The reaction was vigorously stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below.

### Comparative Example 7

After having been continuously dried at 130°C for 2hrs, a 1L stainless steel polymerization autoclave equipped with mechanical stirring was evacuated while hot and then filled with N₂ gas 3 times. 380 mL of hexane and 120 mL of 1-octene were charged into the polymerization system, then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, and 3.3 mg (2.5 µmol) of complex Ni₈ was added simultaneously. The reaction was vigorously stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below.

### Example 23

Preparation of complex Ni₉ (represented by Formula II, wherein R¹, R³ are methyl, R², R⁴, R⁵ are hydrogen, R₃, R₄ are p-fluorophenyl, R₁₁ is ethyl, M is nickel, Y is O, and X is Br):

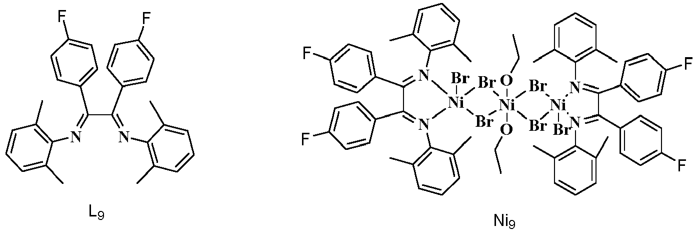

A solution of 0.277 g (0.9 mmol) of (DME)NiBr₂ in ethanol (10 mL) was added slowly dropwise to a solution of 0.272 g (0.6 mmol) of ligand L₉ in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₉ as brownish-red powdery solids. Yield: 74.1 %. Elemental analysis (calculated for C₆₄H₆₂Br₆F₄N₄Ni₃O₂): C, 46.57; H, 3.79; N, 3.39; experimental value (%): C, 46.72; H, 3.97; N, 3.48.

After having been continuously dried at 130°C for 2hrs, a 1L stainless steel polymerization autoclave equipped with mechanical stirring was evacuated while hot and then filled with N₂ gas 3 times. 380 mL of hexane, 60 mL of 2-octene and 60 mL of 1-hexadecene were charged into the polymerization autoclave, and then 1.0 mL of trimethylaluminum (1.0 mol/L solution in heptane), 12.8 mg (25.0 µmol) of tris(pentafluorophenyl)borane and 20.0 mg (25.0 µmol) of N,N-dimethylanilinium tetrakis(pentafluorophenyl)borate were added thereto, followed by the addition of 4.1 mg (2.5 µmol) of complex Ni₉. The reaction was stirred at 60 °C for 30 minutes, with ethylene pressure being maintained at 10 atm. The reaction mixture was neutralized with an ethanol solution acidified with 10 wt% hydrochloric acid to obtain a polymer. The results are shown in Table 1 below.

**Table 1**

| No. | Complex | Activity (10⁶g·mol⁻¹(Ni)·h⁻¹) | M_{w}×10⁻⁴ | M_{w}/Mₙ |
|---|---|---|---|---|
| Example 1 | Ni₁ | 10.23 | 9.46 | 3.82 |
| Example 2 | Ni₁ | 10.78 | 12.24 | 4.14 |
| Example 3 | Ni₁ | 9.10 | 10.33 | 4.28 |
| Example 4 | Ni₁ | 8.24 | 8.33 | 5.14 |
| Comp. Ex. 1 | Ni₁ | 11.04 | 8.38 | 2.25 |
| Comp. Ex. 2 | Ni₁ | 11.23 | 6.52 | 2.22 |
| Example 5 | Ni₂ | 7.25 | 8.63 | 4.33 |
| Example 6 | Ni₃ | 13.32 | 3.56 | 5.41 |
| Example 7 | Ni₃ | 12.69 | 5.67 | 4.21 |
| Example 8 | Ni₃ | 12.13 | 5.37 | 4.37 |
| Example 9 | Ni₃ | 11.24 | 5.03 | 4.51 |
| Example 10 | Ni₃ | 9.37 | 2.07 | 3.97 |
| Comp. Ex. 3 | Ni₃ | 13.07 | 4.33 | 2.85 |
| Comp. Ex. 4 | Ni₃ | 13.34 | 3.48 | 2.31 |
| Example 11 | Ni4 | 8.42 | 7.24 | 4.18 |
| Example 12 | Ni₅ | 14.32 | 4.34 | 3.67 |
| Example 13 | Ni₅ | 10.44 | 5.23 | 3.98 |
| Example 14 | Ni₅ | 13.13 | 5.37 | 4.42 |
| Example 15 | Ni₅ | 11.42 | 3.27 | 4.28 |
| Example 16 | Ni₅ | 12.82 | 5.33 | 3.80 |
| Example 17 | Ni₅ | 11.07 | 7.83 | 3.74 |
| Comp. Ex. 5 | Ni₅ | 13.62 | 3.45 | 2.39 |
| Comp. Ex. 6 | Ni₅ | 13.21 | 4.07 | 2.73 |
| Example 18 | Ni₆ | 13.67 | 8.22 | 5.21 |
| Example 19 | Ni₇ | 10.47 | 10.80 | 4.72 |
| Example 20 | Ni₈ | 3.83 | 16.5 | 5.22 |
| Example 21 | Ni₈ | 3.74 | 17.1 | 4.83 |
| Example 22 | Ni₈ | 3.71 | 18.8 | 4.97 |
| Comp. Ex. 7 | Ni₈ | 4.52 | 15.4 | 2.10 |
| Example 23 | Ni₉ | 1.47 | 5.60 | 4.47 |

It can be seen from the data in Table 1 that, compared with the comparative examples catalyzing homopolymerization of ethylene and the comparative examples catalyzing copolymerization of α-olefins, the catalyst systems for preparing the polymer of the present invention have higher copolymerization activities even when catalyzing polymerization of mixed olefins comprising internal olefin monomers. GPC test results show that the molecular weight distribution of the polymer obtained by the present invention is a bimodal distribution.

Various embodiments of the present invention have been described above, and the foregoing descriptions are exemplary, not exhaustive, and not limited to the disclosed embodiments. Many modifications and variations without departing from the scope and spirit of the described embodiments will be apparent to those skilled in the art.

## Claims

1. A branched olefin polymer, **characterized in that** the branched olefin polymer is obtained by polymerizing at least one C4-C20 internal olefin monomer and optionally ethylene, propylene, or a C4-C20 terminal olefin monomer,
the branched olefin polymer having the following characteristics:
(a) a molecular weight of from 10,000 to 500,000 g/mol;
(b) a molecular weight distribution of from 3.5 to 6.0, with GPC characterization showing a bimodal profile;
(c) a melting point of from 0 °C to 110 °C, and a glass transition temperature of from -80 °C to -50 °C; and
(d) a number of methyl groups per 1,000 methylene groups of from 20 to 200; and
the branched olefin polymer including a structure of R¹R²CH(CH₂)ₙCHR³R⁴ or R¹R²R³C(CH₂)ₙCR⁴R⁵R⁶, wherein R¹ to R⁶ contain a segment structure of R⁷R⁸C(CH₂)ₘCR⁹R¹⁰, wherein R⁷ to R¹⁰ contain a segment structure of R¹¹CH(CH₂)ₚCHR¹² or R¹¹CH(CH₂)ₚCR¹²R¹³, wherein R¹¹ to R¹³ are hydrogen, a linear or branched hydrocarbyl, and n, m, p are respectively an integer from 1 to 500.

2. The branched olefin polymer as claimed in claim 1, wherein the branched olefin polymer has the following characteristics: a number of methyl groups per 1,000 methylene groups of from 20 to 100, and a molecular weight of from 20,000 to 300,000 g/mol.

3. The branched olefin polymer as claimed in claim 1, wherein the branched olefin polymer contains 20 to 100 alkyl branches per 1,000 methylene groups, and the branched olefin polymer contains 2 to 10 ethyl branches, 1 to 10 propyl branches, 1 to 10 butyl branches, 1 to 10 pentyl branches, and 1 to 20 hexyl or longer branches, relative to 50 methyl branches.

4. A method for preparing a branched olefin polymer, **characterized in that** the branched olefin polymer is obtained by catalytic polymerization using a catalyst system comprising a metal complex having a structure represented by formula I: 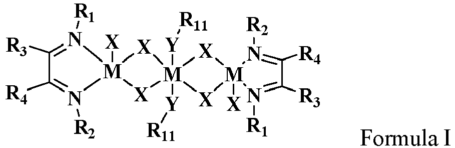 wherein, R₁ and R₂ are each independently a C1-C30 hydrocarbyl with or without a substituent; R₃ and R₄ are each independently selected from the group consisting of hydrogen, halogen, hydroxy, and C1-C20 hydrocarbyl with or without a substituent, and adjacent R₃ and R₄ groups are optionally joined to form a ring or ring system; each R₁₁ is independently a C1-C20 hydrocarbyl with or without a substituent; each Y is independently a Group VIA non-metal atom; each M is independently a Group VIII metal; and each X is independently selected from the group consisting of halogen, C1-C10 hydrocarbyl with or without a substituent and C1-C10 hydrocarbyloxy with or without a substituent.

5. The method for preparing a branched olefin polymer as claimed in claim 4, wherein the metal complex has a structure represented by formula II: 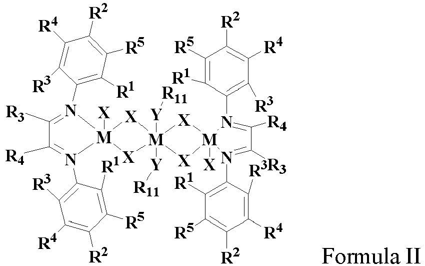 wherein, R¹-R⁵ are each independently selected from the group consisting of hydrogen, halogen, hydroxy, C1-C10 linear alkyl with or without a substituent, C3-C10 branched alkyl with or without a substituent, C3-C10 cycloalkyl with or without a substituent, C1-C10 linear alkoxy with or without a substituent, C3-C10 branched alkoxy with or without a substituent, C3-C10 cycloalkoxy with or without a substituent, C6-C15 aryl with or without a substituent, C7-C15 aralkyl with or without a substituent and C7-C15 alkaryl with or without a substituent;
R₃ and R₄ are each independently selected from the group consisting of hydrogen, C1-C10 alkyl, halogenated C1-C10 alkyl, and halogen, and more preferably from the group consisting of hydrogen, C1-C6 alkyl, halogenated C1-C6 alkyl, and halogen;
each M is nickel;
each Y is O;
each X is independently selected from the group consisting of fluorine, chlorine and bromine; and
each R₁₁ is independently a C1-C20 alkyl with or without a substituent, preferably a C1-C10 alkyl with or without a substituent, and more preferably a C1-C6 alkyl with or without a substituent;
preferably, the substituent is independently selected from the group consisting of halogen, hydroxy, C1-C6 alkyl, halogenated C1-C6 alkyl, C1-C6 alkoxy and halogenated C1-C6 alkoxy.

6. The method for preparing a branched olefin polymer as claimed in claim 4, wherein the metal complex has a structure represented by formula III: 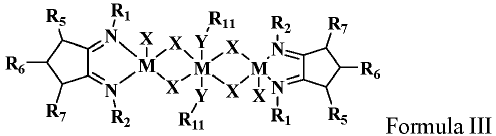 wherein, R₅-R₇ are each independently selected from the group consisting of hydrogen, halogen, hydroxy, and C1-C20 hydrocarbyl with or without a substituent, and R₅-R₇ are optionally joined to form a ring or ring system; and R₁, R₂, R₁₁, Y, M and X are as defined for Formula I;
preferably, the metal complex has a structure represented by formula IV: 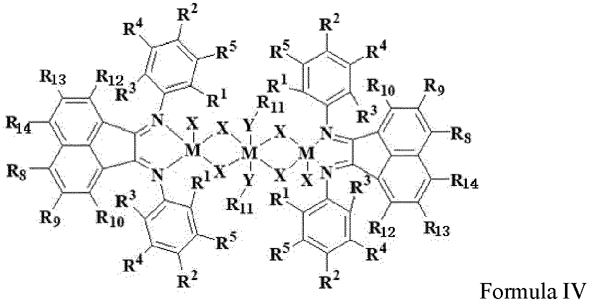 wherein, R¹-R⁵ are each independently selected from the group consisting of hydrogen, halogen, C1-C6 alkyl with or without a substituent, and C1-C6 alkoxy with or without a substituent; R₈-R₁₀ and R₁₂-R₁₄ are each independently selected from the group consisting of hydrogen, halogen, C1-C6 alkyl, and C1-C6 alkoxy; each M is nickel; each Y is O; each X is independently a halogen; and each R₁₁ is independently a C1-C6 alkyl with or without a substituent,
further preferably, the metal complex is one or more selected from the group consisting of:
the complex represented by Formula IV, wherein R¹=R³=ethyl, R²=R⁴=R⁵=R₈-R₁₀=R₁₂-R₁₄=H, R₁₁=methyl, M=Ni, Y=O, X=Br;
the complex represented by Formula IV, wherein R¹=R³=methyl, R²=R⁴=R⁵=R₈-R₁₀=R₁₂-R₁₄=H, R₁₁=methyl, M=Ni, Y=O, X=Br;
the complex represented by Formula IV, wherein R¹-R³=methyl, R⁴=R⁵=R₈-R₁₀=R₁₂-R₁₄=H, R₁₁=methyl, M=Ni, Y=O, X=Br;
the complex represented by Formula IV, wherein R¹=R³=methyl, R²=Br, R⁴=R⁵=R₈-R₁₀=R₁₂-R₁₄=H, R₁₁=methyl, M=Ni, Y=O, X=Br;
the complex represented by Formula IV, wherein R¹=R³=Br, R²=R⁴=R⁵=R₈-R₁₀=R₁₂-R₁₄=H, R₁₁=methyl, M=Ni, Y=O, X=Br;
the complex represented by Formula IV, wherein R¹=R³=Cl, R²=R⁴=R⁵=R₈-R₁₀=R₁₂-R₁₄=H, R₁₁=methyl, M=Ni, Y=O, X=Br;
the complex represented by Formula IV, wherein R¹=R³=F, R²=R⁴=R⁵=R₈-R₁₀=R₁₂-R₁₄=H, R₁₁=methyl, M=Ni, Y=O, X=Br;
the complex represented by Formula IV, wherein R¹=R³=ethyl, R²=R⁴=R⁵=R₈-R₁₀=R₁₂-R₁₄=H, R₁₁=ethyl, M=Ni, Y=O, X=Br;
the complex represented by Formula IV, wherein R¹=R³=methyl, R²=R⁴=R⁵=R₈-R₁₀=R₁₂-R₁₄=H, R₁₁=ethyl, M=Ni, Y=O, X=Br;
the complex represented by Formula IV, wherein R¹-R³=methyl, R⁴=R⁵=R₈-R₁₀=R₁₂-R₁₄=H, R₁₁=ethyl, M=Ni, Y=O, X=Br;
the complex represented by Formula IV, wherein R¹=R³=methyl, R²=Br, R⁴=R⁵=R₈-R₁₀=R₁₂-R₁₄=H, R₁₁=ethyl, M=Ni, Y=O, X=Br;
the complex represented by Formula IV, wherein R¹=R³=Br, R²=R⁴=R⁵=R₈-R₁₀=R₁₂-R₁₄=H, R₁₁=ethyl, M=Ni, Y=O, X=Br;
the complex represented by Formula IV, wherein R¹=R³=Cl, R²=R⁴=R⁵=R₈-R₁₀=R₁₂-R₁₄=H, R₁₁=ethyl, M=Ni, Y=O, X=Br;
the complex represented by Formula IV, wherein R¹=R³=F, R²=R⁴=R⁵=R₈-R₁₀=R₁₂-R₁₄=H, R₁₁=ethyl, M=Ni, Y=O, X=Br;
the complex represented by Formula IV, wherein R¹=R³=ethyl, R²=R⁴=R⁵=R₈-R₁₀=R₁₂-R₁₄=H, R₁₁=isobutyl, M=Ni, Y=O, X=Br;
the complex represented by Formula IV, wherein R¹=R³=methyl, R²=R⁴=R⁵=R₈-R₁₀=R₁₂-R₁₄=H, R₁₁=isobutyl, M=Ni, Y=O, X=Br;
the complex represented by Formula IV, wherein R¹-R³=methyl, R⁴=R⁵=R₈-R₁₀=R₁₂-R₁₄=H, R₁₁=isobutyl, M=Ni, Y=O, X=Br;
the complex represented by Formula IV, wherein R¹=R³=methyl, R²=Br, R⁴=R⁵=R₈-R₁₀=R₁₂-R₁₄=H, R₁₁=isobutyl, M=Ni, Y=O, X=Br;
the complex represented by Formula IV, wherein R¹=R³=Br, R²=R⁴=R⁵=R₈-R₁₀=R₁₂-R₁₄=H, R₁₁=isobutyl, M=Ni, Y=O, X=Br;
the complex represented by Formula IV, wherein R¹=R³=Cl, R²=R⁴=R⁵=R₈-R₁₀=R₁₂-R₁₄=H, R₁₁=isobutyl, M=Ni, Y=O, X=Br;
the complex represented by Formula IV, wherein R¹=R³=F, R²=R⁴=R⁵=R₈-R₁₀=R₁₂-R₁₄=H, R₁₁=isobutyl, M=Ni, Y=O, X=Br;
the complex represented by Formula IV, wherein R¹=R³=ethyl, R²=R⁴=R⁵=R₁₂=R₁₃=R₉=R₁₀=H, R₁₄=R₈=methyl, R₁₁=ethyl, M=Ni, Y=O, X=Br;
the complex represented by Formula IV, wherein R¹=R³=methyl, R²=R⁴=R⁵=R₁₂=R₁₃=R₉ =R₁₀=H, R₁₄=R₈=methyl, R₁₁=ethyl, M=Ni, Y=O, X=Br;
the complex represented by Formula IV, wherein R-R³=methyl, R⁴=R⁵=R₁₂=R₁₃=R₉=R₁₀=H, R₁₄=R₈=methyl, R₁₁=ethyl, M=Ni, Y=O, X=Br;
the complex represented by Formula IV, wherein R¹=R³=methyl, R²=Br, R⁴=R⁵=R₁₂=R₁₃=R₉=R₁₀=H, R₁₄=R₈=methyl, R₁₁=ethyl, M=Ni, Y=O, X=Br;
the complex represented by Formula IV, wherein R¹=R³=Br, R²=R⁴=R⁵=R₁₂=R₁₃=R₉=R₁₀=H, R₁₄=R₈=methyl, R₁₁=ethyl, M=Ni, Y=O, X=Br;
the complex represented by Formula IV, wherein R¹=R³=Cl, R²=R⁴=R⁵=R₁₂=R₁₃=R₉=R₁₀=H, R₁₄=R₈=methyl, R₁₁=ethyl, M=Ni, Y=O, X=Br; and
the complex represented by Formula IV, wherein R¹=R³=F, R²=R⁴=R⁵=R₁₂=R₁₃=R₉=R₁₀=H, R₁₄=R₈=methyl, R₁₁=ethyl, M=Ni, Y=O, X=Br.

7. The method for preparing a branched olefin polymer as claimed in claim 4, wherein the metal complex has a structure represented by formula V: 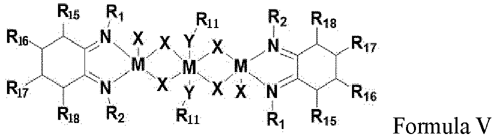 wherein, R₁₅-R₁₈ are each independently selected from the group consisting of hydrogen, halogen, hydroxy, and C1-C20 hydrocarbyl with or without a substituent, and R₁₅-R₁₈ are optionally joined to form a ring or ring system; and R₁, R₂, R₁₁, Y, M and X are as defined for Formula I;
preferably, the metal complex has a structure represented by formula VI: 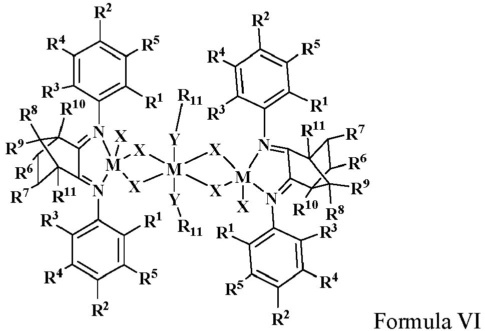 wherein, R¹-R¹¹ are each independently selected from the group consisting of hydrogen, halogen, hydroxy, C1-C10 linear alkyl with or without a substituent, C3-C10 branched alkyl with or without a substituent, C3-C10 cycloalkyl with or without a substituent, C1-C10 linear alkoxy with or without a substituent, C3-C10 branched alkoxy with or without a substituent, C3-C10 cycloalkoxy with or without a substituent, C6-C15 aryl with or without a substituent, C7-C15 aralkyl with or without a substituent, and C7-C15 alkaryl with or without a substituent; and R₁₁, Y, M and X are as defined for Formula I;
further preferably, the metal complex is one or more selected from the group consisting of:
the diimine-metal complex represented by Formula VI, wherein R¹=R³=methyl, R²=R⁴-R⁷=R¹⁰=H, R⁸=R⁹=R¹¹=R₁₁=methyl, M=Ni, Y=O, X=Br;
the diimine-metal complex represented by Formula VI, wherein R¹=R³=ethyl, R²=R⁴-R⁷=R¹⁰=H, R⁸=R⁹=R¹¹=R₁₁=methyl, M=Ni, Y=O, X=Br;
the diimine-metal complex represented by Formula VI, wherein R¹-R³=methyl, R⁴-R⁷=R¹⁰=H, R⁸=R⁹=R¹¹=R₁₁=methyl, M=Ni, Y=O, X=Br;
the diimine-metal complex represented by Formula VI, wherein R¹=R³=methyl, R²=Br, R⁴-R⁷=R¹⁰=H, R⁸=R⁹=R¹¹=R₁₁=methyl, M=Ni, Y=O, X=Br;
the diimine-metal complex represented by Formula VI, wherein R¹=R³=F, R²=R⁴-R⁷=R¹⁰=H, R⁸=R⁹=R¹¹=R₁₁=methyl, M=Ni, Y=O, X=Br;
the diimine-metal complex represented by Formula VI, wherein R¹=R³=Cl, R²=R⁴-R⁷=R¹⁰=H, R⁸=R⁹=R¹¹=R₁₁=methyl, M=Ni, Y=O, X=Br;
the diimine-metal complex represented by Formula VI, wherein R¹=R³=Br, R²=R⁴-R⁷=R¹⁰=H, R⁸=R⁹=R¹¹=R₁₁=methyl, M=Ni, Y=O, X=Br;
the diimine-metal complex represented by Formula VI, wherein R¹=R³=methyl, R²=R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹=R³=ethyl, R²=R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹-R³=methyl, R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹=R³=methyl, R²=Br, R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹=R³=F, R²=R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹=R³=Cl, R²=R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹=R³=Br, R²=R⁴-R⁷=R¹⁰=H, R⁸=R⁹=R¹¹=methyl, R₁₁=ethyl, M=Ni, Y=O, X=Br;
the diimine-metal complex represented by Formula VI, wherein R¹=R³=methyl, R²=R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹=R³=ethyl, R²=R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹-R³=methyl, R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹=R³=methyl, R²=Br, R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹=R³=F, R²=R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹=R³=Cl, R²=R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹=R³=Br, R²=R⁴-R⁷=R¹⁰=H, R⁸=R⁹=R¹¹=methyl, Rn=isobutyl, M=Ni, Y=O, X=Br;
the diimine-metal complex represented by Formula VI, wherein R¹=R³=methyl, R²=R⁴-R⁷=R¹⁰=H, R⁸=R⁹=methyl, R¹¹=bromomethyl, R₁₁=ethyl, M=Ni, Y=O, X=Br;
the diimine-metal complex represented by Formula VI, wherein R¹=R³=ethyl, R²=R⁴-R⁷=R¹⁰=H, R⁸=R⁹=methyl, R¹¹=bromomethyl, R₁₁=ethyl, M=Ni, Y=O, X=Br;
the diimine-metal complex represented by Formula VI, wherein R¹-R³=methyl, R⁴-R⁷=R¹⁰=H, R⁸=R⁹=methyl, R¹¹=bromomethyl, R₁₁=ethyl, M=Ni, Y=O, X=Br;
the diimine-metal complex represented by Formula VI, wherein R¹=R³=methyl, R²=Br, R⁴-R⁷=R¹⁰=H, R⁸=R⁹=methyl, R¹¹=bromomethyl, R₁₁=ethyl, M=Ni, Y=O, X=Br;
the diimine-metal complex represented by Formula VI, wherein R¹=R³=F, R²=R⁴-R⁷=R¹⁰=H, R⁸=R⁹=methyl, R¹¹=bromomethyl, R₁₁=ethyl, M=Ni, Y=O, X=Br;
the diimine-metal complex represented by Formula VI, wherein R¹=R³=Cl, R²=R⁴-R⁷=R¹⁰=H, R⁸=R⁹=methyl, R¹¹=bromomethyl, R₁₁=ethyl, M=Ni, Y=O, X=Br; and
the diimine-metal complex represented by Formula VI, wherein R¹=R³=Br, R²=R⁴-R⁷=R¹⁰=H, R⁸=R⁹=methyl, R¹¹=bromomethyl, R₁₁=ethyl, M=Ni, Y=O, X=Br.

8. The method for preparing a branched olefin polymer as claimed in claim 4, wherein the catalyst system further comprises a cocatalyst, which is selected from the group consisting of organoaluminum compounds and/or organoboron compounds, wherein the organoaluminum compound is at least one selected from the group consisting of alkylaluminoxanes, alkylaluminums and alkyl aluminum halides, and the organoboron compound is selected from the group consisting of aromatic hydrocarbyl borons and/or borates;
preferably, the organoaluminum compound is at least one selected from the group consisting of trimethylaluminum, triethylaluminum, triisobutylaluminum, tri-n-hexylaluminum, trioctylaluminum, diethyl aluminum hydride, diisobutyl aluminum hydride, diethyl aluminum chloride, diisobutyl aluminum chloride, ethyl aluminum sesquichloride, methyl aluminum sesquichloride, ethyl aluminum dichloride, methylaluminoxanes, and modified methyl aluminoxanes;
preferably, the organoboron compound is at least one selected from the group consisting of tris(pentafluorophenyl)boron, N,N-dimethylanilinium tetrakis(pentafluorophenyl)borate and triphenylcarbonium tetrakis(pentafluorophenyl)borate.

9. A branched olefin polymer obtained by the method as claimed in any one of claims 4 to 8.

10. A branched olefin polymer having units derived from at least one C4-C20 internal olefin monomer and optionally units derived from at least one C2-C20 terminal olefin monomer, the branched olefin polymer having the following characteristics:
(a) a molecular weight of from 10,000 to 500,000 g/mol;
(b) a molecular weight distribution of from 3.5 to 6.0, with GPC characterization showing a bimodal profile;
(c) a melting point of from 0 °C to 110 °C, and a glass transition temperature of from -80 °C to -50 °C; and
(d) a number of methyl groups per 1000 methylene groups of from 20 to 200.

11. Use of the branched olefin polymer as claimed in any one of claims 1 to 3, 9 and 10 or the branched olefin polymer obtained by the preparation method as claimed in any one of claims 4 to 8, for example, use:
(1) as a processing aid for resins;
(2) as a plasticizer; or
(3) in a hot-melt adhesive.

12. A polymer composition comprising the branched olefin polymer as claimed in any one of claims 1 to 3, 9 and 10 or the branched olefin polymer obtained by the preparation method as claimed in any one of claims 4 to 8, wherein the branched olefin polymer is used as a processing aid for resins or a plasticizer, and/or the polymer composition can be used as a hot-melt adhesive.
